# EUROPEAN PATENT APPLICATION

(11) **EP 2 796 356 A1**
(43) Date of publication of application: **29.10.2014**
(21) Application number: 12858921.5
(22) Date of filing: 19.12.2012
(51) Int. Cl.: B62K 21/16, B62K 21/22

(54) **ADJUSTABLE STEM FOR BICYCLES**

(30) Priority: 22.12.2011 ES 201101349
(71) Applicant: Ferragutcasas Butiñà, Francesc, 17430 Santa Coloma de Farners (Gerona) (ES); Freixes Folch, Fidel, 17430 Santa Coloma de Farners (Gerona) (ES)
(72) Inventor: FREIXES FOLCH, Fidel, E-17430 Santa Coloma de Farners (Gerona) (ES)
(74) Representative: Evens, Paul Jonathan
(86) International application number: PCT/ES2012/070880
(87) International publication number: WO 2013/093157

(57) **Abstract**

The invention relates to an adjustable stem for bicycles, formed by a bar (3) provided at one end with a clamp (6) for securing on a tube shaft (7) of the steering fork (2) of the bicycle of application. In addition, a fastener (4) is slidably mounted on the bar (3) and is associated with a clamp (5) for securing to the handlebars (1) of the bicycle. The fastener (4) includes a locking system allowing same to be fixed in variable selective positions along the bar (3).

## Description

### Field of the Art

The present invention relates to bicycle steering component elements, proposing a stem that allows quickly and easily establishing and modifying the position of the handlebar with respect to the shaft of the steering fork of bicycles in order to adapt said handlebar to the best conditions of use in different applications of use.

### State of the Art

A bicycle steering unit allows turning the front wheel of said bicycles for forward movement orientation, primarily comprising a steering fork which, by means of a tube shaft, is arranged rotatably with respect to the bicycle frame, said fork securing the front wheel of the bicycle, whereas it has associated therewith at the upper end a part known as stem, whereby the handlebar is held in a suitable position.

There are different types of stems, some are in the shape of a bar with one clamp at one of the ends for securing on the tube shaft of the steering fork and another clamp at the other end for engaging the handlebar; while other stems are L-shaped with one end configured to be secured inside the tube shaft of the steering fork by means of a wedge system, whereas they have at the other end a clamp for engaging the handlebar.

The length and the angle of the stem of the bicycle steering unit determine the heightwise position of the handlebar and the distance between it and the shaft of the steering fork, the optimality of these variables depending on user's physical characteristics and on the application of use for which the bicycle is intended, since it determines the user's posture on the bicycle, furthermore influencing the speed of response of the steering unit and stability in bicycle handling.

In that sense, a longer and lower stem allows the cyclist to adopt a more streamlined position which is best for high pedaling rates, in addition to preventing the front part of the bicycle from lifting up when pedaling, so such stem is more suitable for going up very steep slopes and for sprinting; in contrast shorter and taller stems are more suitable for going downhill; whereas stems having intermediate measurement and height are the most suitable for going up gentle slopes and for flat terrains.

However, bicycle stems conventionally have fixed length and inclination without adaptation possibility, so those which are optimal for certain uses of bicycles are less suitable for other uses, therefore users must restrict themselves to specific characteristics of the bicycle that they use, despite the fact they may require different characteristics at different times to achieve optimal yield of the effort and operations performed when using the bicycle.

Solutions consisting of moving stems for changing the angle thereof and solutions for changing length have been developed; however, there are no solutions that allow modifying both variables at the same time, and furthermore, the existing embodiments of moving stems in this sense do not allow performing modifications while riding the bicycle.

### Object of the Invention

The present invention proposes a bicycle stem which has been developed with features that allow quick and easy adjustment of the distance between the handlebar and the shaft of the steering fork of the bicycle of application.

This stem object of the invention comprises a bar having at one end a clamp for securing on the tube shaft of the steering fork of the bicycle, a fastener which is associated with a clamp for engaging the handlebar sliding on said bar, including a locking system for fixing the sliding fastener in selective positions along the bar.

The locking system for locking the sliding fastener in selective positions on the bar of the stem can be formed by any conventional type of fixing, for example a setscrew, which is incorporated in the sliding fastener and can be pressed against the bar; there particularly being provided an embodiment by means of a key which goes through the sliding fastener and can be selectively inserted in a set of holes made on the bar of the stem, there being a workable control for operating said key from the handlebar of the bicycle.

The user can therefore modify the position of the handlebar by simply releasing the retention of the sliding fastener on the bar of the stem and moving said siding fastener engaged with the handlebar to its new position on the bar of the stem, locking it again in the new position. The user can thus change the position of the handlebar quickly and easily at any time to adapt the bicycle to the particular conditions of use thereof; operations to modify the stem being able to be performed even when riding the bicycle, without having to stop riding.

Therefore, a stem is thus obtained which allows adjusting the distance of the handlebar with respect to the shaft of the steering fork in bicycles in a practical manner to achieve the best conditions of use; said stem therefore has advantageous features making it preferable with respect to fixed stems in steering units that are conventionally used in bicycles.

### Description of the Drawings

Figure 1 shows a perspective view of a stem according to the invention installed in the steering fork of a bicycle.
Figures 2 to 4 show respective perspective views of three different positions for placing the handlebar of the bicycle by means of the stem of the invention.

### Detailed Description of the Invention

The object of the invention relates to a stem of a bicycle steering unit with an embodiment that allows adjusting the distance for positioning the handlebar (1) with respect to the shaft of the steering fork (2) in a quick, easy and efficient manner.

The proposed stem comprises a bar (3) on which there is slidably mounted a fastener (4) incorporating a clamp (5) with which it is integrally associated for engaging the handlebar (1).

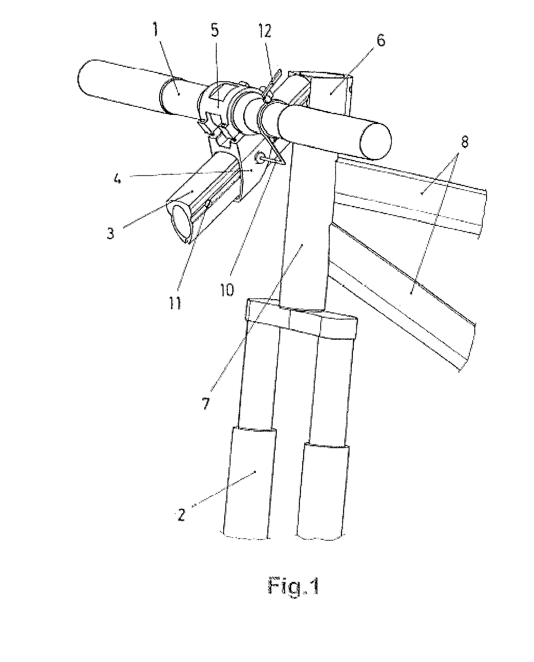

The bar (3) comprises a tubular profile which is integrally attached at one end to the clamp (6) for securing on the steering fork (2) of the bicycle of application, specifically on the tube shaft (7) whereby the steering fork (2) is rotatably coupled on the structural frame (8) of the bicycle, as seen in Figure 1.

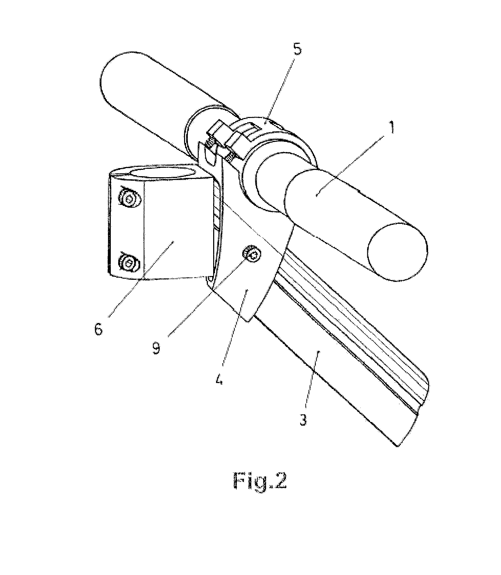

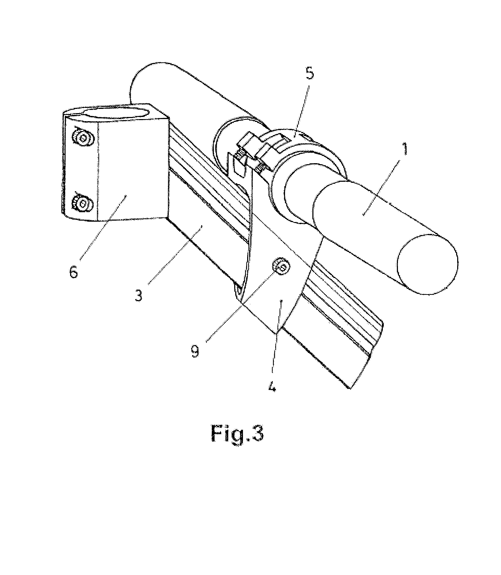

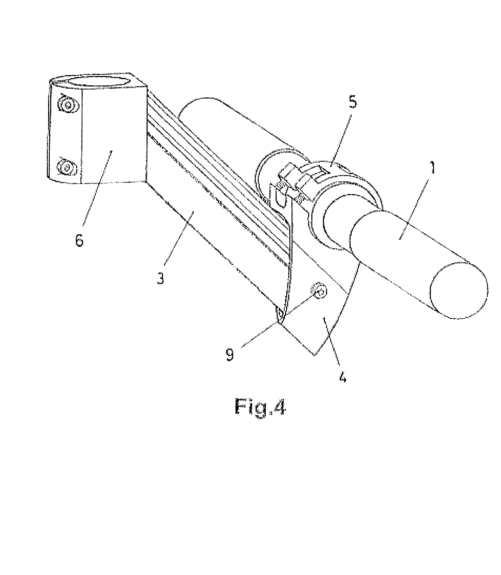

The fastener (4) incorporates a locking system for fixing by retaining same on the bar (3), said locking system being able to be of any conventional type, for example a setscrew (9), which is incorporated by screwing through the fastener (4) and can be pressed tightly against the bar (3), such as in the embodiment of Figures 2 to 4.

According to a particular embodiment (Figure 1), said locking system is formed by a key (10) arranged through the fastener (4) with the possibility of moving forward and backward, and it can be selectively inserted in a set of holes (11) made on the bar (3), said key (10) being linked with an operating control (12) incorporated in the handlebar (1) of the bicycle.

The user can thus change the distance of the handlebar (1) with respect to the tube shaft (7) of the steering fork (2), as seen in Figures 2, 3 and 4, by means of a very simple operation that only requires releasing the fixing retaining the fastener (4) on the bar (3) in order to move said fastener (4) with the handlebar (1) to the new desired position, and to lock it again in that new position, which thus allows adapting the bicycle of application to the best conditions of use depending on the particularities of use. To that end, it is only necessary to act on the setscrew (9) with a suitable tool or on the key (10) by means of the control (12) from the handlebar (1) of the bicycle, according to the embodiment of the locking system.

## Claims

1. An adjustable stem for bicycles, formed by an assembly whereby the handlebar (1) of the bicycle is secured with a certain separation with respect to the steering fork (2) in which the front wheel of the bicycle is incorporated, **characterized in that** it comprises a bar (3) having at one end a clamp (6) for securing on a tube shaft (7) of the steering fork (2) of the bicycle of application, on which bar (3) there is slidably mounted a fastener (4) incorporating a clamp (5) associated therewith for engaging the handlebar (1) of the bicycle, said fastener (4) having a locking system which allows fixing by retaining same in different selective positions along the bar (3).

2. The adjustable stem for bicycles according to claim 1, **characterized in that** the locking system for locking the fastener (4) on the bar (3) comprises a pressure element, such as a setscrew (9), which is incorporated by screwing on through the fastener (4) and can be pressed tightly against the bar (3).

3. The adjustable stem for bicycles according to claim 1, **characterized in that** the locking system for locking the fastener (4) on the bar (3) comprises a moving key(10) which goes through the fastener (4) and can be selectively inserted in a set of holes (11) of the bar (3), said key (10) being linked with an operating control (12) incorporated in the handlebar (1) of the bicycle.
